# FASCICULE DE BREVET EUROPEEN

(11) **EP 2 710 445 B1**
(45) Date de publication et mention de la délivrance du brevet: **08.06.2016**
(21) Numéro de dépôt: 12719650.9
(22) Date de dépôt: 27.04.2012
(51) Int. Cl.: G06F 1/16, G06F 1/26, A63F 13/92, A63F 13/98, H02J 7/00

(54) **ETUI DE PROTECTION POUR UNE CONSOLE DE JEUX**
SCHUTZHÜLLE FÜR EINE SPIELKONSOLE
PROTECTIVE CASE FOR A GAME CONSOLE

(30) Priorité: 30.04.2011 FR 1101342
(43) Date de publication de la demande: 26.03.2014
(73) Titulaire: Bigben Interactive SA, 59818 Lesquin (FR)
(72) Inventeur: LIDDLE, Mark, Binfield Bracknell RG42 4BZ (GB); TILEY, Andrew, Southampton Hampshire SO16 8AY (GB); FALC, Alain, B-8500 Kortrijk (BE)
(74) Mandataire: Vigand, Philippe
(86) Numéro de dépôt international: PCT/EP2012/057819
(87) Numéro de publication internationale: WO 2012/150193

(56) Documents cités:
- EP-A1- 2 187 601
- FR-A1- 2 923 647
- US-A1- 2009 128 092
- US-A1- 2009 314 400
- Chris Roper: "Nyko Charger Case for PSP", , 27 juin 2005 (2005-06-27), XP002663115, Extrait de l'Internet: URL:http://uk.ign.com/articles/2005/06/27/ nyko-charger-case-for-psp [extrait le 2011-11-07]

## Description

La présente invention concerne de manière générale un étui de protection pour une console portable de jeux vidéo.

Il est connu dans l'art antérieur des dispositifs permettant de protéger des consoles portables de jeux vidéo. Les documents FR 2 949 952, FR 2 923 647 ou FR 2 945 660 décrivent de tels étuis, qui servent à protéger la console de jeux tout en permettant de jouer avec la console lorsque cette dernière est insérée dans l'étui car ils proposent deux positions d'utilisation, une première position fermée où la console est complètement protégée et une deuxième position ouverte où la console est partiellement protégée en laissant la possibilité à l'utilisateur de jouer.

Par ailleurs, il est connu d'intégrer dans des étuis pour téléphone portable une batterie auxiliaire afin d'augmenter l'autonomie en utilisation nomade. Ces étuis guident le téléphone dans une glissière et en fin de course, une prise vient s'enficher dans le connecteur du téléphone. En contrepartie, ces systèmes présentent notamment l'inconvénient de nécessiter une connexion électrique par enfichage d'une prise dans un connecteur du téléphone. Il en résulte une sollicitation mécanique inappropriée sur le connecteur du téléphone car cette liaison solidarise le téléphone avec l'étui, de sorte que les efforts résultant du poids du téléphone d'une part ou des vibrations et/ou chocs sur l'étui d'autre part sont absorbés par le connecteur du téléphone. Il peut s'ensuivre un endommagement ou même une rupture du connecteur du téléphone car ce connecteur, initialement prévu pour recevoir une prise de connexion libre, au bout d'un fil, n'est pas conçu pour transmettre de tels efforts. De plus, la manipulation et l'installation du téléphone dans ces étuis est malaisée car il faut insérer le téléphone dans une glissière et en fin de course enficher la prise de l'étui dans le connecteur du téléphone, en prenant garde de bien les aligner, sous peine de détériorer l'un ou l'autre des éléments de connexion. Enfin, pour empêcher tout mouvement de déconnexion du téléphone dans le sens inverse, il faut soit prévoir un ajustement serré de l'étui sur le téléphone ou de la prise sur le connecteur, soit prévoir un élément mobile de verrouillage supplémentaire. Dans le premier cas de figure, l'ajustement serré va rendre la manipulation difficile et dans le deuxième cas de figure, le mécanisme additionnel va complexifier l'étui et en augmenter le coût. De plus un tel système de connexion est mal adapté pour une utilisation de la console en position connectée dans la mesure où les contraintes liées à une séquence de jeu sur console sont nettement supérieures à celles liées à une utilisation d'un téléphone.

Par exemple, le document US 2009/314400 A1 décrit un étui de protection avec des moyens de fourniture de courant pour un appareil électronique portable, et le document US 2009/128092 A1 décrit une station d'accueil avec une batterie, et formant un rangement pour un ordinateur portable.

En tenant compte du fait qu'une console de jeux doit être facilement démontée de son étui pour changer de cartouche de jeux car une partie des utilisateurs sont de jeunes personnes, le concept de ces étuis pour téléphone n'est pas transposable pour réaliser un étui de console de jeux car leur manipulation serait trop minutieuse.

Un but de la présente invention est de répondre aux inconvénients mentionnés ci-dessus et en particulier, tout d'abord, de proposer un étui de protection avec une batterie auxiliaire pour une console de jeux portable, l'étui restant simple à manipuler pour assurer la connexion aussi bien que la fixation de la console, tout en étant économique à fabriquer.

Pour cela un premier aspect de l'invention concerne un étui de protection pour console de jeu vidéo, ledit étui comprenant une face supérieure et une face inférieure pivotant l'une par rapport à l'autre au niveau d'une zone arrière et définissant une première position dite fermée lorsque la face supérieure est superposée à la face inférieure et une deuxième position dite ouverte lorsque les faces supérieure et inférieure sont juxtaposées; des moyens de maintien de la console fixés sur la face inférieure à l'intérieur de l'étui aptes à maintenir en place la console lorsqu'elle est insérée dans les moyens de maintien et des moyens de fermeture de la face supérieure avec la face inférieure pour les maintenir dans la position fermée, caractérisé en ce que l'étui comprend un circuit électrique de charge apte à recharger une batterie de la console lorsque la console est insérée dans les moyens de maintien.

L'étui selon l'invention présente une utilisation aisée tout en permettant la charge de la batterie de la console lorsque celle-ci est maintenue en place dans les moyens de maintien de la console. L'utilisateur n'a donc pas à faire de manipulation particulière pour que le circuit de charge de l'étui puisse charger la batterie de la console. Cet étui sera particulièrement apprécié pour les utilisateurs juvéniles car la manipulation de la console est limitée aux opérations pour l'insérer dans les moyens de maintien, et ensuite l'étui et son circuit de charge sont aptes à recharger la batterie de la console. L'invention propose un étui de protection apte à recharger la batterie de la console, sans pour autant ajouter de difficulté ou d'opération fastidieuse pour effectuer la charge de la batterie. L'ergonomie est améliorée avec la diminution des manipulations pour positionner et brancher la console.

Les moyens de maintien sont aptes à maintenir en place, par clipsage, la console dans une position clipsée, et dans la position clipsée, le circuit électrique de charge comprend des moyens de contact électrique aptes à être directement en contact avec au moins une zone de contact électrique de la console, reliée à la batterie de la console. Le clipsage proposé par l'invention est particulièrement adapté pour faciliter l'utilisation de l'étui et la connexion électrique du circuit de charge se fait directement avec la console, sans fil ou prise à enficher, ce qui permet de limiter la complexité et le coût de fabrication de l'étui. Il est également à noter que la connexion directe dispense l'utilisateur de devoir enficher une prise dans un connecteur de la console ou connecter un câble de liaison, et cela sera particulièrement apprécié pour les utilisateurs qui n'ont pas la dextérité ou la patience pour effectuer une telle opération dans de bonnes conditions pour ne pas endommager l'une ou l'autre des parties de la connectique. En d'autres termes, l'utilisateur n'a qu'à positionner la console dans les moyens de maintien et le circuit de charge est apte à recharger la batterie de la console sans autre opération.

Les moyens de contact électrique sont agencés de sorte que le clipsage de la console dans les moyens de maintien provoque la connexion électrique des moyens de contact électrique avec ladite au moins une zone de contact électrique de la console. L'étui selon la présente invention utilise astucieusement le mouvement de clipsage pour provoquer la connexion électrique du circuit de charge avec la zone de contact de la console de jeux. Cette synergie réduit les manipulations de la console et permet de fournir une fonction de charge de batterie sans opération supplémentaire de la part de l'utilisateur.

La zone de contact électrique de la console est agencée dans une cavité, et les moyens de contact électrique comprennent au moins une patte de contact électrique apte à être directement en contact avec ladite au moins une zone de contact électrique de la console agencée dans la cavité. Cette mise en oeuvre permet de simplifier les moyens de connexion du circuit de charge car ceux-ci n'ont qu'à entrer en contact avec des zones prédéterminées de la console situées dans une cavité. Une patte permet de réaliser cette fonction et cette mise en oeuvre est en conséquence peu complexe.

L'étui comporte un mécanisme de commande actionnable par la console et apte à commander
- un mouvement de connexion de ladite au moins une patte de contact avec ladite au moins une zone de contact électrique de la console lorsque la console est clipsée dans les moyens de maintien ou,
- un mouvement de déconnexion de ladite au moins une patte de contact avec ladite au moins une zone de contact électrique de la console lorsque la console est déclipsée des moyens de maintien. Ce mécanisme provoque la connexion ou la déconnexion de la console et reste simple, car il est actionné directement par la console.

Avantageusement, le circuit électrique de charge comporte au moins une batterie auxiliaire. Une telle réserve d'énergie est bien adaptée à la recharge de la batterie de la console.

Avantageusement, le circuit électrique de charge comporte un dispositif permettant une utilisation prioritaire de la batterie auxiliaire sur l'utilisation de la batterie de la console. Cette mise en oeuvre permet de laisser à l'utilisateur le choix du moment de charge et celui-ci peut décider d'utiliser d'abord la réserve d'énergie du circuit de charge, pour préserver la batterie de la console, et ensuite, si besoin, détacher la console de l'étui et pouvoir encore l'utiliser sur sa batterie propre.

Avantageusement, le circuit électrique de charge comporte des moyens indicateurs lumineux aptes à afficher une information visuelle sur un état de la batterie auxiliaire et/ou sur la connexion électrique entre les moyens de contact électrique et ladite au moins une zone de contact électrique de la console. Cette mise en oeuvre apporte une option supplémentaire à l'utilisateur qui peut ainsi contrôler facilement l'utilisation de l'étui et de sa batterie auxiliaire.

Avantageusement, ladite au moins une patte de contact électrique est un moyen de verrouillage du clipsage de la console dans les moyens de maintien. L'utilisation des moyens de contact pour verrouiller le maintien en place permet d'améliorer la protection de la console, sans ajout de composants supplémentaires. Cet effet bonus est obtenu sans surcoût pour l'utilisateur.

Avantageusement, ladite au moins une patte de contact électrique est un moyen de maintien en place de la console. Cette mise en oeuvre permet de réduire le coût de l'étui car les moyens de contact électrique sont utilisés pour maintenir en place la console. On a moins de composants, pour assurer plus de fonctions.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un étui selon l'invention ;
- la figure 2 représente l'étui de la figure 1 avec une console fixée dessus.

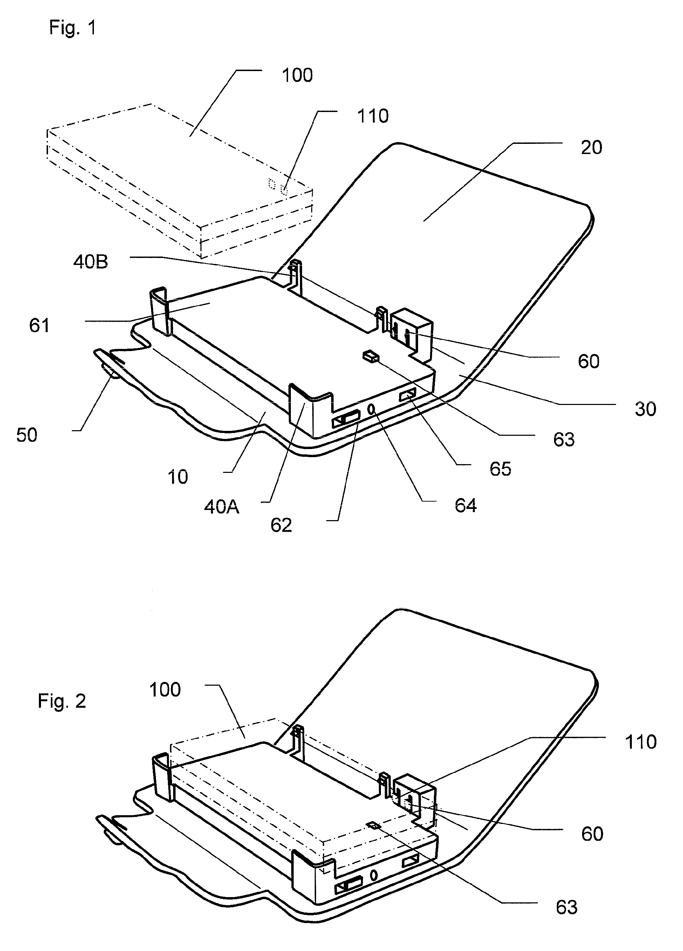

La figure 1 représente un étui selon l'invention qui comporte une face inférieure 10 et une face supérieure 20 reliées entre elles par une articulation arrière 30. L'étui comporte des moyens de maintien en place 40A, 40B d'une console 100. Ces moyens de maintien en place sont aptes à clipser la console 100 par l'intermédiaire des pattes de clipsage 40B. Lorsque la face supérieure 20 est rabattue sur la face inférieure 10, un bouton de fermeture 50 est apte à maintenir la face supérieure 20 fermée. Par ailleurs, l'étui comporte un circuit électrique de charge avec une batterie auxiliaire 61, un interrupteur 62, un voyant 64, une prise de charge 65 et des pattes de contact 60. Un levier de commande 63 est apte à commander la sortie des pattes de contact 60 comme cela sera expliqué à la figure 2.
La figure 2 représente l'étui de la figure 1 avec la console 100 fixée dessus. A cet effet, les pattes de maintien 40B coopèrent avec une rainure de la console 100, à savoir la fente de la charnière arrière de la console. Pendant l'opération de clipsage, la console 100 venant en contact avec la partie supérieure de la batterie auxiliaire 61, le levier de commande 63 est enfoncé par la face inférieure de la console 100 et lors de ce mouvement, les pattes de contact 60 sont poussées vers les zones de contact 110 de la console. Ces zones de contact 110 sont reliées à la batterie de la console. Dès lors, le circuit de charge de l'étui est apte à recharger la batterie de la console, et ceci sans aucune manipulation relative à la connexion électrique. Cette connexion a été réalisée pendant le mouvement de clipsage, de sorte que l'ergonomie de manipulation est améliorée. Pendant l'utilisation, le voyant lumineux 64 renseigne l'utilisateur sur l'état de la batterie auxiliaire, en émettant par exemple des couleurs telles que verte pour une batterie auxiliaire chargée, orange pour une batterie auxiliaire proche de la décharge et rouge pour indiquer que la batterie auxiliaire n'est plus apte à fournir de l'énergie à la console. L'utilisateur peut utiliser la prise 65 pour recharger la batterie auxiliaire à l'aide d'un cordon.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Etui de protection pour console (100) de jeu vidéo, ledit étui comprenant :
- une face supérieure (20) et une face inférieure (10), pivotant l'une par rapport à l'autre au niveau d'une zone arrière (30) et définissant une première position dite fermée lorsque la face supérieure est superposée à la face inférieure et une deuxième position dite ouverte lorsque les faces supérieure et inférieure sont juxtaposées;
- des moyens de maintien (40A, 40B) de la console, fixés sur la face inférieure à l'intérieur de l'étui aptes à maintenir en place la console lorsqu'elle est insérée dans les moyens de maintien et ;
- des moyens de fermeture (50) de la face supérieure avec la face inférieure pour les maintenir dans la position fermée,
l'étui comprenant un circuit électrique de charge apte à recharger une batterie de la console lorsque la console est insérée dans les moyens de maintien,
les moyens de maintien (40A, 40B) étant aptes à maintenir en place, par clipsage, la console (100) dans une position clipsée,
dans la position clipsée, le circuit électrique de charge comprend des moyens de contact électrique (60) aptes à être directement en contact avec au moins une zone de contact électrique (110) de la console, reliée à la batterie de la console,
les moyens de contact électrique (60) étant agencés de sorte que le clipsage de la console (100) dans les moyens de maintien (40A, 40B) provoque la connexion électrique des moyens de contact électrique avec ladite au moins une zone de contact électrique (110) de la console,
la zone de contact électrique (110) de la console (100) étant agencée dans une cavité,
les moyens de contact électrique (60) comprenant au moins une patte de contact électrique apte à être directement en contact avec ladite au moins une zone de contact électrique de la console agencée dans la cavité, **caractérisé en ce que** l'étui comporte un mécanisme de commande (63) actionnable par la console (100) et apte à commander
- un mouvement de connexion de ladite au moins une patte de contact (60) avec ladite au moins une zone de contact électrique (110) de la console lors d'un mouvement de clipsage de la console dans les moyens de maintien (40A, 40B) ou,
- un mouvement de déconnexion de ladite au moins une patte de contact avec ladite au moins une zone de contact électrique de la console lors d'un mouvement de déclipsage de la console des moyens de maintien.

2. Etui selon la revendication 1, **caractérisé en ce que** le circuit électrique de charge comporte au moins une batterie auxiliaire (61).

3. Etui selon la revendication 2, **caractérisé en ce que** le circuit électrique de charge comporte un dispositif permettant une utilisation prioritaire de la batterie auxiliaire sur l'utilisation de la batterie de la console.

4. Etui selon la revendication 3, **caractérisé en ce que** le circuit électrique de charge comporte des moyens indicateurs lumineux (64) aptes à afficher une information visuelle sur un état de la batterie auxiliaire (61) et/ou sur la connexion électrique entre les moyens de contact électrique (60) et ladite au moins une zone de contact électrique (110) de la console (100).

5. Etui selon la revendication 4, **caractérisé en ce que** ladite au moins une patte de contact électrique (60) est un moyen de verrouillage du clipsage de la console (100) dans les moyens de maintien.

6. Etui selon la revendication 4, **caractérisé en ce que** ladite au moins une patte de contact électrique (60) est un moyen de maintien en place de la console (40A, 40B).

## Patentansprüche

1. Schutzhülle für Videospielkonsole (100), wobei die Hülle umfasst:
- eine Oberseite (20) und eine Unterseite (10), die im Verhältnis zueinander im Bereich einer hinteren Zone (30) schwenken und eine erste geschlossene Position, wenn die Oberseite auf der Unterseite liegt, und eine zweite geöffnete Position, wenn die Ober- und Unterseite aneinandergereiht liegen, definieren,
- Haltemittel (40A, 40B) der Konsole, die auf der Unterseite im Innern der Hülle befestigt sind, die imstande sind, die Konsole am Platz zu halten, wenn sie in die Haltemittel eingesetzt ist; und
- Verschlussmittel (50) der Oberseite mit der Unterseite, um sie in der geschlossenen Position zu halten,
wobei die Hülle einen Ladestromkreis umfasst, der imstande ist, einen Akku der Konsole aufzuladen, wenn die Konsole in die Haltemittel eingesetzt ist.
wobei die Haltemittel (40A, 40B) imstande sind, die Konsole (100) durch Klipsen in einer geklipsten Position zu halten,
wobei der Ladestromkreis in der geklipsten Position elektrische Kontaktmittel (60) umfasst, die imstande sind, mit mindestens einer elektrische Kontaktzone (110) der Konsole, die mit dem Akku der Konsole verbunden ist, direkt im Kontakt zu sein,
wobei die elektrischen Kontaktmittel (60) derart ausgebildet sind, dass das Klipsen der Konsole (100) in den Haltemitteln (40A, 40B) zur elektrischen Verbindung der elektrischen Kontaktmittel mit der mindestens einen elektrischen Kontaktzone (110) der Konsole führt,
wobei die elektrische Kontaktzone (110) der Konsole (100) in einem Hohlraum ausgebildet ist,
wobei die elektrischen Kontaktmittel (60) mindestens eine elektrische Kontaktzunge umfassen, die imstande ist, mit der mindestens einen elektrischen Kontaktzone der Konsole, die in dem Hohlraum ausgebildet ist, direkt im Kontakt zu sein,
**dadurch gekennzeichnet, dass** die Hülle einen Steuermechanismus (63) aufweist, der durch die Konsole (100) bedienbar ist und imstande zu steuern
- eine Verbindungsbewegung der mindestens einen Kontaktzunge (60) mit der mindestens einen elektrischen Kontaktzone (110) der Konsole bei einer Klipsbewegung der Konsole in die Haltemittel (40A, 40B), oder
- eine Trennbewegung der mindestens einen Kontaktzunge von der mindestens einen elektrischen Kontaktzone der Konsole bei einer Entklipsbewegung der Konsole von den Haltemitteln.

2. Hülle nach Anspruch 1, **dadurch gekennzeichnet, dass** der Ladestromkreis mindestens einen Hilfsakku (61) aufweist.

3. Hülle nach Anspruch 2, **dadurch gekennzeichnet, dass** der Ladestromkreis eine Vorrichtung aufweist, die eine vorrangige Benutzung des Hilfsakkus gegenüber der Benutzung des Akkus der Konsole erlaubt.

4. Hülle nach Anspruch 3, **dadurch gekennzeichnet, dass** der Ladestromkreis Leuchtanzeigemittel (64) aufweist, die imstande sind, eine visuelle Information über einen Zustand des Hilfsakkus (61) und/oder über die elektrische Verbindung zwischen den elektrischen Kontaktmitteln (60) und der mindestens einen elektrischen Kontaktzone (110) der Konsole (100) anzuzeigen.

5. Hülle nach Anspruch 4, **dadurch gekennzeichnet, dass** die mindestens eine elektrische Kontaktzunge (60) ein Klips-Verriegelungsmittel der Konsole (100) in den Haltemitteln ist.

6. Hülle nach Anspruch 4, **dadurch gekennzeichnet, dass** die mindestens eine elektrische Kontaktzunge (60) ein Platzhaltemittel der Konsole (40A, 40B) ist.

## Claims

1. A protective case for a video game console (100), said case comprising:
- an upper face (20) and a lower face (10), pivoting relatively to each other at a rear area (30) and defining a first so-called closed position when the upper face is superposed to the lower face and a second so-called open position when the upper and lower faces are juxtaposed;
- means (40A, 40B) for holding the console, attached onto the lower face inside the case capable of maintaining in place the console when it is inserted into the holding means; and
- means (50) for closing the upper face with the lower face in order to maintain them in the closed position,
the case comprising an electric charging circuit capable of recharging a battery of the console when the console is inserted into the holding means,
the holding means (40A, 40B) being capable of maintaining in place by means of clips, the console (100) in a clipped position,
in the clipped position, the electric charging circuit comprises electric contact means (60) capable of being directly in contact with at least one electric contact area (110) of the console, connected to the battery of the console,
the electric contact means (60) being laid out so that the clipping of the console (100) in the holding means (40A, 40B) causes electric connection of the electric contact means with said at least one electric contact area (110) of the console,
the electric contact area (110) of the console (100) being laid out in a cavity,
the electric contact means (60) comprising at least one electric contact tab capable of being in direct contact with said at least one electric contact area of the console laid out in the cavity,
**characterized in that** the case includes a control mechanism (63) which may be actuated by the console (100) and capable of controlling
- a movement for connecting said at least one contact tab (60) with said at least one electric contact area (110) of the console upon a movement for clipping the console in the holding means (40A, 40B), or
- a movement for disconnecting said at least one contact tab with said at least one electric contact area of the console upon a movement for unclipping the console from the holding means.

2. The case according to claim 1, **characterized in that** the electric charging circuit includes at least one auxiliary battery (61).

3. The case according to claim 2, **characterized in that** the electric charging circuit includes a device allowing priority use of the auxiliary battery over the use of the battery of the console.

4. The case according to claim 3, **characterized in that** the electric charging circuit includes light indicator means (64) capable of displaying visual information on a state of the auxiliary battery (61) and/or on the electric connection between the electric contact means (60) and said at least one electric contact area (110) of the console (100).

5. The case according to claim 4, **characterized in that** said at least one electric contact tab (60) is a means for locking the clipping of the console (100) in the holding means.

6. The case according to claim 4, **characterized in that** said at least one electric contact tab (60) is a means for maintaining in place the console (40A, 40B).
